# EUROPEAN PATENT APPLICATION

(11) **EP 4 202 024 A1**
(43) Date of publication of application: **28.06.2023**
(21) Application number: 21216441.2
(22) Date of filing: 21.12.2021
(51) Int. Cl.: C11B 13/04, B01D 11/02

(54) **RESIDUE EXTRACTION FROM A SORBENT WITH A CHLORINATED SOLVENT**

(71) Applicant: VITO NV, 2400 Mol (BE)
(72) Inventor: Vanlerberghe, Brecht, 2400 Mol (BE); Elst, Kathy, 2400 Mol (BE); Corderi Gandara, Sandra, 2400 Mol (BE)
(74) Representative: Arnold & Siedsma

(57) **Abstract**

The present invention relates to a method for recovering a residue from a spent sorbent, such as a fat residue or an oil residue, entrapped in a spent sorbent. The present invention further pertains to the sorbent and the residue obtained by the present method.

## Description

### FIELD OF THE INVENTION

The present invention relates to a method for recovering a residue from a spent sorbent, such as a fat residue or an oil residue, entrapped in a spent sorbent. The present invention further pertains to the sorbent and the residue obtained by the present method.

### BACKGROUND TO THE INVENTION

The oil refining industry make use of sorbent, especially bleaching earths, for the bleaching of oil. The bleaching process is of high importance, as it removes undesirable substances from said oil, such as soap residues, traces of heavy metals, pesticide residues and residues of phosphorus compounds etc. apart from its main purpose of removal of coloring matter like carotenoids and chlorophyll pigments. The bleaching process produces large amounts of spent sorbent, such as spent bleaching earth (SBE, or UBE for Used Bleaching Earth), which is usually treated as a waste product. SBE is mostly deposited as waste world-wide. It is estimated that annually at least 100,000 MT of fats/oils are ditched in the form of SBE. SBE usually contains high amounts of entrapped crude oil, making disposal of SBE an environmental hazard. The constant change in environmental legislation and the growing importance of safety in the disposal techniques has led to many restrictions in solid waste management. The disposal of spent bleaching clay from the vegetable oil processing industry is a problem of growing importance. The earlier research on SBE reclamation focused on the oil left, as the SBE itself was not regenerated for reuse. Disposal of SBE by incineration, inclusion in animal feeds, land filling methods, or concrete etc. is generally practiced. These solutions are less than ideal. The reuse of SBE is a great opportunity for cost saving in the oil processing industry.

US2003201228A1 discloses a process to recover oil from spent bleaching earth recovered from vegetable oil refining process. US2003201228A1 exemplifies a process involving three sub-processes comprising reacting the spent bleaching earth with toluene, n-hexane, acetone and isopropyl alcohol at a temperature between 35° C. to 50° C.; separating the solids and liquid from slurry formed in the previous step; and extracting oil from the liquid fraction obtained in the previous step. Efficiency of oil extraction are provided for hexane only. A disadvantage of the process described in US2003201228A1 is that hexane is a carcinogenic and hence its use should be avoided.

It is therefore industrially important to investigate alternative ways to regenerate spent sorbents, such as SBE, and/or recover a residue entrapped therein, by means of novel solvents or mixture thereof providing for high extraction efficiency of oil and which are more environmentally friendly compared to the solvents in the state of the art.

### SUMMARY OF THE INVENTION

In a first aspect, the present invention pertains to a method for recovering a residue, such as a fat and/or oil residue, from a spent sorbent, such as a spent bleaching earth, the method comprising a first step a) of solubilizing, at least in part, a residue comprised in a spent sorbent, by means of a solvent, thereby obtaining a residue enriched solution, which residue enriched solution comprises the solvent and the residue solubilized therein. The method of the present invention further comprises a second step b) of separating the residue solution obtained at step a) from the spent sorbent, thereby recovering the residue as a solution of said solvent, wherein the solvent provided at step a) to solubilize the residue comprises an unsaturated alkyl chloride. The method in accordance with the present invention is particularly advantageous as the residue entrapped in the spent sorbent can be efficiently separated and is particularly efficient in removing fat and/or oil residues from spent bleaching earths. Other advantages of the method of the present invention are that the solvent can be easily separated from the both the sorbent (e.g. by decantation or filtration) and the recovered residue (e.g. by distillation).

According to the present invention, the unsaturated alkyl chloride is of formula (I):

CₙH₂ₙ₋ₚClₚ, (I)

wherein n is an integer from 2 to 8, and p is an integer from 1 to 2n, preferably n is from 2 to 4, and p is from 1 to 2. Preferably, the unsaturated alkyl chloride is selected from: trans-1,2-dichloroethene, cis-1,2-dichloroethene, and mixtures thereof.

According to yet a further embodiment of the present invention, the solvent further comprises a fluorinated alkyl ether, preferably the fluorinated alkyl ether is of formula (II):

CₙF₂ₙ₊₁OCₘH₂ₘ₊₁, (II)

wherein n is an integer from 2 to 8, and m is an integer from 1 to 5, preferably n is from 4 to 6, and m is from 1 to 2, preferably, the fluorinated alkyl ether is selected from: methyl nonafluorobutyl ether, methyl nonafluoroisobutyl ether, ethyl nonafluorobutyl ether, 1,1,1,2,2,3,4,5,5,5-decafluoro-3-methoxy-4-(trifluoromethyl) pentane.

In a further aspect, the present invention pertains to the use of a solvent as defined in the present description of the invention, in the extraction of a residue from a spent sorbent.

### DETAILED DESCRIPTION OF THE INVENTION

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous. When describing the compounds of the invention, the terms used are to be construed in accordance with the following definitions, unless a context dictates otherwise.

The term "about" or "approximately" as used herein when referring to a measurable value such as a parameter, an amount, a temporal duration, and the like, is meant to encompass variations of +/- 10 % or less, preferably +/- 5 % or less, more preferably +/- 1 % or less, and still more preferably +/- 0.1 % or less of and from the specified value, insofar such variations are appropriate to perform in the disclosed invention. It is to be understood that the value to which the modifier "about" or "approximately" refers is itself also specifically, and preferably, disclosed.

In a first aspect, the present invention relates to a method for recovering a residue from a spent sorbent, comprising the steps of:
a) solubilizing, at least in part, a residue comprised in a spent sorbent by means of a solvent, thereby obtaining a residue enriched solution;
b) separating the residue enriched solution obtained at step a), thereby recovering the residue, wherein
at step a) the solvent comprises an unsaturated alkyl chloride.

Therefore, in accordance with the present invention, at a first step a) a spent sorbent, such as a spent bleaching earth is contacted with a solvent comprising an unsaturated alkyl chloride. By means of the solvent, a residue entrapped in the spent sorbent solubilizes, thereby providing for the obtainment of a solution of said solvent and the residue. Said solution is referred to as residue enriched solution. Therefore, in accordance with the present invention, by means of the term "residue enriched solution", reference is made to a solution comprising a solvent and a residue solubilized therein. After step a) the residue enriched solution obtained at step a) is separated from the spent sorbent at step b), thereby recovering said residue from the spent sorbent.

The method in accordance with the present invention is particularly advantageous as the residue entrapped in the spent sorbent can be efficiently separated from said sorbent, thereby allowing recycling of the spent sorbent and/or the residue. By recovering the residue form the spent sorbent, the sorbent can be further used to accomplish its sorbing function e.g., sorb one or more impurities in vegetable fats and/or oils, such as pigments, or it can be safely disposed. The recovered residue can also be further utilized. The method according to the present invention is particularly efficient in removing fats and or oil residue from spent bleaching earth, and further the residue enriched solution obtained after extraction can be advantageously separated by means of distillation, due to the low boiling point of the solvent of the present invention.

In accordance with the present invention, by means of the term "residue", reference is made to one or more substances entrapped in a sorbent after said sorbent has been used a sorption agent in a process with the purpose of removing unwanted components from the process mixture. For example, reference is made to substances which have been removed by said sorbent during the refining of a liquid matter, such as a fat or oil, for example a vegetable fat or oil, or compounds comprising an inorganic acid such as sulfuric acid, phosphonic acid, nitric acid. Such compounds may get trapped in the sorbent when the liquid matter is contacted with the sorbent for the purpose of removing unwanted compounds such as coloring matter like carotenoids and chlorophyll pigments from said vegetable oil. These components then get trapped into said sorbent, and unfortunately part of desired components such as the fats or oils are entrapped in the sorbent as well. Since these fats and oils and compounds comprising inorganic acids such as those listed above, represent a high value in the process, it is desirable to minimize losses, and to find a process with which they can be recovered from the spent sorbent.

According to an embodiment of the present invention, the residue entrapped in the spent sorbent is a fat residue or an oil residue. In accordance with the present invention, by means of the term "fat residue or an oil residue", reference is made to a residue comprising free organic acids, such as free fatty acids, or esters such as fatty acid esters, such as esters of a fatty acid and glycerol (glycerol fatty acid ester or fatty acid glyceride). There are no particular limitations on the fat residue or the oil residue of the present embodiment, examples of fat residues or oil residues include oils compressed and extracted from plant-based raw materials such as soybeans, sesame seeds, rapeseed, safflower, sunflower and corn, and oils or fats extracted from animal-based raw materials such as fish and livestock meat. Among these, the fat residue or oil residue which the present invention seeks to recover from the spent sorbent is preferably a vegetable oil extracted from a plant-based raw material.

At step a), the spent sorbent may be provided in the form of a powder, comprising particles. If so desired the spent sorbent may be subjected to grinding in advance of subjecting it to the method of the present invention, to achieve deagglomeration of particles that have agglomerated and improve accessibility by means of the solvent of the residue contained therein.

In accordance with the present invention, by means of the term "spent sorbent", reference is made to a sorbent that has been used in a process for refining a compound, such as a fat or an oil, and thereby contains an amount of said compound entrapped therein. In case of fat or oil, there are no particular limitations on the oil or fat refining method, and a similar method to that described below for the method for producing a refined oil or fat can be used. In a preferred embodiment of the present invention, the spent sorbent is a spent bleaching earth. It shall be clear that the term "spent sorbent" may also refer to a sorbent that has been used in other types of processes.

In the present invention, by means of the term "sorbent" reference is made to a substance which has the property of collecting molecules of another substance by sorption. Examples of sorbents are, and not limited to, porous media, for example activated carbon, clay minerals, for example kaolin earth, bleaching earth, zeolites, diatomaceous earth, or combinations thereof.

In step a), and according to an embodiment of the present invention, the spent sorbent is a spent bleaching earth. Bleaching earths are generally composed of up to three types of clay minerals, for example bentonite, attapulgite and sepiolite, or a combination of montmorillonite, attapulgite, and sepiolite. Clay minerals such as dickite, silica, ilmenite, and merlinite may also be present. It shall be clear that the nature of the bleaching earth may depend on the nature of the process in which it has been used. Bleaching earths may also comprise mineral acid treated clay minerals, from which basic components have been eluted such as aluminum, iron and magnesium. The clay minerals are capable of acting as absorbers with capacity being dependent on mineralogical structure and properties, such as surface area, particle size distribution, porosity and surface activity. Bleaching earths according to the present invention are suitable to sorb one or more impurities, such as coloring substances, from a liquid, such as an oil e.g., a vegetable oil. Bleaching earth is used in the refining of vegetable oils and animal fats for human consumption. The absorbent capacity of the bleaching earth removes the impurities and unwanted matter, such as coloring substances (carotenoids), soaps, proteins and others, found in oils and fats. By means of the method of the present invention, a residue entrapped in said spent bleaching earth can be recovered.

The sorbent having a reduced amount of the residue obtained according to the method of the present invention can be advantageously re-used for example to sorb impurities in fats or oils in the chemical industry, such as in the biodiesel industry, or in the refining of edible vegetable oils and fats, specialty oils and fats such as fish oils and fish oil concentrates, typically Omega-3 fish oils such as eicosapentaenoic acid (EPA) or docosahexaenoic acid (DHA), or in any conventional applications for such sorbents. In a preferred embodiment, the reaction products, in particular esters, that have been recovered from the sorbent may be used as fertilizer or in their conventional applications.

In accordance with the present invention, by means of the term "solvent", reference is made to one or more liquid compounds which are provided to solubilize, at least in part, the residue entrapped in the spent sorbent in accordance with the present invention. According to the present invention, the solvent comprises an unsaturated alkyl chloride. The solvent according to the present invention can therefore consist of an unsaturated alkyl chloride or is a solvent mixture comprising said unsaturated alkyl chloride and one or more further liquid compounds.

In accordance with the present invention, the unsaturated alkyl chloride, reference is made to a compound of formula (I)

CₙH₂ₙ₋ₚClₚ, (I)

Wherein n is an integer, and p is an integer from 1 to 2n.

Further, according to the present invention, the unsaturated alkyl chloride is of formula (I)

CₙH₂ₙ₋ₚClₚ, (I)

wherein n is an integer from 2 to 8, and p is an integer from 1 to 2n, preferably n is from 2 to 4, and p is from 1 to 2, more preferably n is from 2 to 3, and p is 2. An advantage of the present invention is that the method provides for an efficient extraction of residues from a sorbent.

Examples of unsaturated alkyl chlorides according to the comprise, and are not limited to: chloroethene, (Z)-1,2-dichloroethene (cis-1,2-dichloroethene), (E)-1,2-dichloroethene (trans-1,2-dichloroethene), 1,1-dichloroethene, 3-chloroprop-1-ene, 2,3-dichloroprop-1-ene, (1Z)-1,3-dichloroprop-1-ene, 2-chloroprop-1-ene, 1,1-dichloroprop-1-ene, (1E)-1,3-dichloroprop-1-ene, (1E)-1-chloroprop-1-ene, (1E)-1,2-dichloroprop-1-ene, (1Z)-1,2-dichloroprop-1-ene, (1Z)-1-chloroprop-1-ene and mixtures thereof.

In accordance with an embodiment of the present invention, the unsaturated alkyl chloride is selected from: (Z)-1,2-dichloroethene (cis-1,2-dichloroethene), (E)-1,2-dichloroethene (trans-1,2-dichloroethene), 1,1-dichloroethene, 3-chloroprop-1-ene, 2,3-dichloroprop-1-ene, (1Z)-1,3-dichloroprop-1-ene, 2-chloroprop-1-ene, 1,1-dichloroprop-1-ene, (1E)-1,3-dichloroprop-1-ene, (1E)-1-chloroprop-1-ene, (1E)-1,2-dichloroprop-1-ene, (1Z)-1,2-dichloroprop-1-ene, (1Z)-1-chloroprop-1-ene and mixtures thereof.

In accordance with yet a further embodiment of the present invention, the unsaturated alkyl chloride is selected from: (Z)-1,2-dichloroethene (cis-1,2-dichloroethene), (E)-1,2-dichloroethene (trans-1,2-dichloroethene), 1,1-dichloroethene, 3-chloroprop-1-ene, 2-chloroprop-1-ene, (1E)-1-chloroprop-1-ene, (1Z)-1-chloroprop-1-ene and mixtures thereof.

In a preferred embodiment of the present invention, the unsaturated alkyl chloride is selected from: 1,1-Dichloroethene, trans-1,2-dichloroethene, cis-1,2-dichloroethene, and mixtures thereof, preferably trans-1,2-dichloroethene, cis-1,2-dichloroethene, and mixtures thereof, more preferably trans-1,2-dichloroethene. It has been found that by using the unsaturated alkyl chloride of the present embodiment for the method of the present invention, the separation of the solvent from the sorbent is facilitated, in particularly due to the low boiling temperature of these unsaturated alkyl chloride.

In a preferred embodiment of the present invention, the unsaturated alkyl chloride, which is preferably trans-1,2-dichloroethene, is in an amount greater than 50% w/w, preferably greater than 60% w/w, more preferably greater than 70% w/w, more preferably greater than 80% w/w. In a further particular embodiment of the present invention, the unsaturated alkyl chloride, which is preferably trans-1,2-dichloroethene, is in an amount from 60 w/w% to 95 w/w%, preferably from 65 w/w% to 90 w/w%. The present embodiments of the invention have been found particularly advantageous for increasing the efficiency of extraction of the residue, in particular a fat and/or oil vegetable residue, from the sorbent, whilst minimizing the concurrent extraction of chlorophyll.

According to yet a further embodiment of the present invention, the solvent further comprises a fluorinated alkyl ether. Fluorinated alkyl ethers are particularly useful to impart non-flammability characteristics to solvents. Various fluorinated alkyl ethers can be used in solvents as described in the present invention, such as and not limited to: 1,1,2,2-Tetrafluoroethyl 2,2,2-Trifluoroethyl Ether, Methyl Nonafluorobutyl Ether, 1,1,1,2,2,3,4,5,5,5-Decafluoro-3-methoxy-4-(trifluoromethyl)pentane, 1,1,2,3,3,3-Hexafluoropropyl Methyl Ether, Ethyl Nonafluorobutyl Ether, methyl nonafluoroisobutyl ether, and mixtures thereof. An advantage of the present embodiment is that the addition of a fluorinated alkyl ether to the unsaturated alkyl chloride comprising solvent provides non-flammability characteristics to solvents but also low global warming potential.

According to yet a further embodiment of the present invention, the fluorinated alkyl ether is of formula (II):

CₙF₂ₙ₊₁OCₘH₂ₘ₊₁, (II)

wherein n is an integer from 2 to 8, and m is an integer from 1 to 5, preferably n is from 4 to 6, and m is from 1 to 2. According to a further embodiment of the present invention, the fluorinated alkyl ether is selected from: methyl nonafluorobutyl ether, methyl nonafluoroisobutyl ether, ethyl nonafluorobutyl ether, 1,1,1,2,2,3,4,5,5,5-decafluoro-3-methoxy-4-(trifluoromethyl) pentane, and mixtures thereof.

According to an embodiment of the present invention, the solvent for the extraction of the residue from the sorbent, particularly a bleaching earth, comprises:
- an unsaturated alkyl chloride of formula (I); in particular selected from 1,1-Dichloroethene, trans-1,2-dichloroethene, cis-1,2-dichloroethene, and mixtures thereof; preferably trans-1,2-dichloroethene, cis-1,2-dichloroethene, and mixtures thereof; in an amount from about 60 wt% to about 95 wt%, preferably from about 65 wt% to about 90 wt%;
one or more fluorinated alkyl ethers in an amount from about 5 wt% to about 40 wt%, preferably from about 10 wt% to about 35 wt%.

According to yet an embodiment of the present invention, the solvent for the extraction of the residue from the sorbent, particularly a bleaching earth, comprises and/or consists of:
- Trans-1,2-dichloro-ethylene in an amount from about 60 % w/w to about 95 % w/w, preferably from about 65 % w/w to about 90 % w/w;
- one or more fluorinated alkyl ethers in an amount from about 5 % w/w to about 40 % w/w, preferably from about 10 % w/w to about 35 % w/w;
- an alcohol, preferably a C₁-C₄ alkyl alcohol, in an amount of from 0 % w/w to 10 % w/w

According to a further, preferred embodiment of the present invention, the solvent for the extraction of the residue from a sorbent, particularly a bleaching earth, comprises and/or consists of:
- Trans-1,2-dichloro-ethylene in an amount from about 80 % w/w to about 90 % w/w;
- one or more fluorinated alkyl ethers, preferably Pentane 1,1,1,2,2,3,4,5,5,5-decafluoro- 3-methoxy-4-(trifluoromethyl), in an amount of from about 10 % w/w to about 20 % w/w.

An advantage of the present embodiment is that the extraction of chlorophyll is significantly reduced compared to the use of other solvents.

The present embodiment has been found particularly beneficial in providing the best extraction efficiency whilst providing for a non-flammable solvent.

The present solvent compositions according to the present specific embodiment have been found advantageous in providing high extraction efficiency whilst being easy to separate from the residue and safer to handle compared to other solvents used in the state of the art to extract residues from sorbents, such as bleaching earth.

According to yet a further embodiment of the present invention, the solvent has a boiling temperature in the range of from about 30°C to about 60°C, preferably in the range from 35°C to 55°C, preferably from 40°C to 50°C. An advantage of the present embodiment is that the solvent can be more easily separated from the recovered residue, whilst minimizing the decomposition of said residue. In other words, in accordance with the present embodiment, the evaporation of the solvent from the residue enriched solution can take place at a temperature which is low enough to minimize the thermal decomposition of the residue.

According to a further embodiment of the present invention, at step a) the solvent is an azeotropic solvent. By means of the term "azeotropic solvent", reference is made to a liquid mixture (therefore comprising at least two liquids) that has a constant boiling point and whose vapor has the same composition as the liquid. An advantage of the present embodiment is that the solvent in the residue enriched solution can be more easily separated from residue by means of distillation.

According to a further embodiment of the present invention, the solvent further comprises an alcohol, either substituted or unsubstituted, linear or branched. Preferably, the alcohol is a C₁-C₄ alkyl alcohol, preferably a C₁-C₄ alkyl monohydric alcohol. The alcohol is preferably 2-propanol. In accordance with the present invention, by means of the term "alcohol", reference is made to any organic compound whose molecule contains one or more hydroxyl groups attached to a carbon atom. The alcohol according to the present invention may be linear or branched, and may be either monohydric, or dihydric or greater. Possible alcohols which can be added the solvent include, and are not limited to, linear monohydric alcohols such as methanol, ethanol, 1-propanol, 1-butanol, 1-pentanol and 1-hexanol, and branched monohydric alcohols such as 2-propanol and 2-butanol.

According to a further embodiment of the present invention, step a) comprises contacting the spent sorbent with the solvent at a temperature from 30°C to 60°C. An advantage of the present embodiment is that the extraction of the residue by means of the solvent is facilitated.

After a first extraction of the residue from the spent sorbent, it is possible that unrecovered residues are still entrapped within the sorbent. In order to improve the efficiency of removal of the residue, it has been found beneficial to subject the spent sorbent a further extraction procedure in accordance with the present invention. By doing so, a larger amount of residues can be recovered from the sorbent.

In a further aspect, the present invention pertains to the use of a solvent as defined in one or more of any one embodiment of the present description of the invention, in the extraction of a residue from a spent sorbent.

In accordance with a further embodiment of said second aspect of the present invention, the use of said solvent is made for the extraction of one or more fat and/or oil residues, preferably vegetable fat or oil residues, from a spent bleaching earth.

### EXPERIMENTAL PART

### MATERIALS AND METHODS

### MATERIALS

Spent bleaching earth was provided from local industry. The bleaching earth was characterized on its moisture, organic matter (=OM) and ash content by determining its weight loss after oven treatment at respectively 105 and 550 °C. This material contains 27.3 % moisture, 25.4 % OM and 47.4 % ash (ratio organic matter/ash 0.536). The solvents, cyclohexane, ethylacetate, ethylformate and cyclopentyl methyl ether (CPME) were provided by Sigma Aldrich. Solvent A is a solvent mixture consisting of Trans-1,2-dichloro-ethylene (68 % w/w), Methyl Nonafluorobutyl Ether (10% w/w), Ethyl Nonafluorobutyl Ether (20% w/w), isopropanol (2% w/w), Solvent B is a solvent mixture consisting of Trans-1,2-dichloro-ethylene (70% w/w), Methyl Nonafluorobutyl Ether (10% w/w), Ethyl Nonafluorobutyl Ether (20% w/w), and Solvent C is a solvent mixture consisting of Trans-1,2-dichloro-ethylene (85% w/w), Pentane 1,1,1,2,2,3,4,5,5,5-decafluoro- 3-methoxy-4-(trifluoromethyl) (15% w/w). Solvents A, B and C are non-flammable and with boiling points lower than 50 °C, respectively 44 °C, 44 °C, and 48°C

### METHOD

Most of the extraction experiments were performed on the wet material via Soxhlet at the boiling point of the solvent, except for a single batch extraction for the CPME/n-hexane mixture. An extraction time of 6h and a substrate ratio of 1/10 g (bleaching earth/solvent) ratio was applied. After the treatment, the bleaching earth and extract were collected separately and extensively dried under N₂ flow and vacuum oven to obtain the dried treated bleaching earth as well as the dried extract.

### EXAMPLE 1 - Comparative Example

A series of solvents not comprising an unsaturated alkyl chloride as in accordance with the present invention where tried, specifically, Cyclohexane, Ethylacetate, Ethylformate, CPME and a mixture of CPME and n-hexane. The results of the extraction are available in **Table 1.**

**Table 1: Mass balance obtained after the extraction with different solvents not in accordance with the present invention, respectively, Cyclohexane, Ethylacetate, Ethylformate, CPME and a mixture of CPME and n-hexane.**

| | **Before extraction** | **After extraction** | | **Total** |
|---|---|---|---|---|
| **Solvent** | **Bleaching earth (g DM)** | **Bleaching earth (g DM)** | **Extract (g dried)** | **Mass balance (% w/w)** |
| Cyclohexane | 7,37 (100%) | 5,47 (74,2%) | 1,87 (25,4%) | 99,6 |
| Ethylacetate | 7,26 (100%) | 5,26 (72,4%) | 1,83 (25,3%) | 97,6 |
| Ethylformate | 7,41 (100%) | 5,41 (73,0%) | 2,00 (27,0%) | 99,9 |
| CPME | 7,47 (100%) | 5,44 (72,8%) | 2,61 (35,0%) | 107,7 |
| CPME/n-hexane (batch) | 7,03 (100%) | 5,80(82,5%) | 1,76 (25,1%) | 107,6 |

### EXAMPLE 2

In accordance with the present example, solvent comprising an unsaturated alkyl chloride have been used for the extraction of an oily residue form a spent bleaching earth.

### Mass balance

As can be seen in **Table 2** here below, deviations of -10% of the mass balance were found. This was attributed to a non-fully dry spent bleaching earth ( see further).

**Table 2: Mass balance obtained after the extraction with different solvents in accordance with the present invention.**

| | **Before extraction** | **After extraction** | | **Total** |
|---|---|---|---|---|
| **Solvent** | **Bleaching earth (g DM)** | **Bleaching earth (g DM)** | **Extract (g dried)** | **Mass balance (% w/w)** |
| A | 7,70 (100%) | 6,45 (83,8%) | 2,08 (27,1%) | 110,8 |
| B | 7,49 (100%) | 6,25 (83,5%) | 2,21 (29,5%) | 112,9 |
| C | 7,70 (100%) | 6,23 (80,9%) | 2,05(26,6%) | 107,6 |

### Assessment based on spent bleaching earth

The spent bleaching earth after extraction was characterized in a similar way as the initial material, see **Table 3** here below. The remaining moisture and organic material were determined by the oven treatment. The results show that in all cases the remaining organic matter was only 9-11 % w/w for the dried extracted spent bleaching earth, corresponding to a reduction of 70-74 % w/w in the organic matter when evaluated relative to the ash.

**Table 3: Overall composition of the spent bleaching earth after extraction. OM stands for Organic Matter, wherein Ash stands for Inorganic matter, and whereas "initial" represents the material before the treatment, used as reference.**

| **Solvent** | **Mass loss (% w/w)** | **Moisture (% w/w)** | **OM (% w/w)** | **Ash (% w/w)** | **OM/Ash (loss %)** |
|---|---|---|---|---|---|
| Initial | | | | | 0,536 (ref) |
| A | 23,4 | 20,5 | 9,88 | 69,66 | 0,142 (73,5%) |
| B | 24,1 | 20,1 | 11,08 | 68,81 | 0,161 (70,0%) |
| C | 30,2 | 15,7 | 11,57 | 72,70 | 0,159 (70,3%) |

### Assessment based on the extracts

The dried extracts were measured for their total fatty acid content (free fatty acids + glycerides) by GC after (trans-)esterification, see **Table 4** here below. The extracts were found to be very rich in total fatty acid content (+89%). Differences were noted in the carotenoids and chlorophyll content of the extracts. The solvents comprising unsaturated alkyl chloride tried have a mixed behavior, in particular solvents A and B provide for the extraction of also detectable amounts of chlorophyll, but the carotenoids remain below detection limit (DL), whereas solvent C provides extraction of not only chlorophyll (in lower amounts compared to solvents A and B), but also carotenoids.

**Table 4: Composition of the dried extracts for solvent extraction. Table 4 illustrates the composition of the extracts and indicates that the extracts are rich in fatty acid-based compounds. In particular, the total FAME corresponds to the amount of all glycerides and fatty acids in the extract after they have been converted to methyl esters. The total FAME therefore represents the total amount present in the extract.**

| **Solvent** | **Weight (% w/w on initial)** | **Total FAME (% w/w on dry extract)** | **Carotenoids (mg/g on dry extract)** | **Chlorophyll (A+B) (mg/g on dry extract)** |
|---|---|---|---|---|
| A | 19,67 | 91,1 | <DL | 0,211 |
| B | 21,44 | 103,1 | <DL | 0,189 |
| C | 19,37 | 88,9 | 0,022 | 0,020 |

Compared to the solvents used in EXAMPLE 1, the solvents comprising an unsaturated alkyl chloride in accordance with the present invention provide for comparable if not superior extraction efficiency compared to the solvents used in EXAMPLE 1, whilst also being non-flammable and with a lower boiling point, thereby providing for ease of separation from the recovered residue. Further, solvents tried in accordance with the present EXAMPLE 2 is beneficial due to their lower toxicity level and their being more environmentally friendly, e.g., by providing a low global warming potential.

## Claims

1. A method for recovering a residue from a spent sorbent, preferably a spent bleaching earth, comprising the steps of:
a) solubilizing, at least in part, a residue comprised in a spent sorbent by means of a solvent, thereby obtaining a residue enriched solution;
b) separating the residue solution obtained at step a), thereby recovering the residue, wherein
the solvent comprises an unsaturated alkyl chloride of formula (I)
CₙH₂ₙ₋ₚClₚ, (I)
wherein
- n is an integer from 2 to 8, and
- p is an integer from 1 to 2n.

2. The method according to claim 1, wherein for the unsaturated alkyl chloride of formula (I)
- n is from 2 to 4, and
- p is from 1 to 2.

3. The method according to any one of the previous claims, wherein the unsaturated alkyl chloride is selected from: (Z)-1,2-dichloroethene (cis-1,2-dichloroethene), (E)-1,2-dichloroethene (trans-1,2-dichloroethene), 1,1-dichloroethene, 3-chloroprop-1-ene, 2-chloroprop-1-ene, (1E)-1-chloroprop-1-ene, (1Z)-1-chloroprop-1-ene and mixtures thereof, preferably 1,1-Dichloroethene, trans-1,2-dichloroethene, cis-1,2-dichloroethene, and mixtures thereof, more preferably trans-1,2-dichloroethene, cis-1,2-dichloroethene, and mixtures thereof.

4. The method according to any one of the previous claims, wherein the unsaturated alkyl chloride is selected from: trans-1,2-dichloroethene, cis-1,2-dichloroethene, and mixtures thereof, preferably trans-1,2-dichloroethene.

5. The method according to any one of the previous claims, wherein in the solvent the unsaturated alkyl chloride, preferably trans-1,2-dichloroethene, is in an amount greater than 50% w/w, preferably greater than 60% w/w, more preferably greater than 70% w/w, more preferably greater than 80% w/w.

6. The method according to any one of the previous claims, wherein at step a) the solvent further comprises a fluorinated alkyl ether.

7. The method according to claim 6, wherein the fluorinated alkyl ether is of formula (II):
CₙF₂ₙ₊₁OCₘH₂ₘ₊₁, (II)
wherein
- n is an integer from 2 to 8, preferably from 4 to 6, and
- m is an integer from 1 to 5, preferably from 1 to 2.

8. The method according to any one of claims 6 to 7, wherein the fluorinated alkyl ether is selected from: methyl nonafluorobutyl ether, methyl nonafluoroisobutyl ether, ethyl nonafluorobutyl ether, 1,1,1,2,2,3,4,5,5,5-decafluoro-3-methoxy-4-(trifluoromethyl) pentane.

9. The method according to any one of claims 6 to 8, wherein the solvent comprises:
- Trans-1,2-dichloro-ethylene in an amount from about 60 % w/w to about 95 % w/w, preferably from about 65 % w/w to about 90 % w/w;
- one or more fluorinated alkyl ethers in an amount from about 5 % w/w to about 40 % w/w, preferably from about 10 % w/w to about 35 % w/w.

10. the method according to claim 9, wherein the solvent comprises and/or consists of, preferably consists of:
- Trans-1,2-dichloro-ethylene in an amount from about 80 % w/w to about 90 % w/w;
- one or more fluorinated alkyl ethers, preferably Pentane 1,1,1,2,2,3,4,5,5,5-decafluoro- 3-methoxy-4-(trifluoromethyl), in an amount of from about 10 % w/w to about 20 % w/w.

11. The method according to any one of the previous claims, wherein the solvent has a boiling temperature in the range of from about 30°C to about 60°C, preferably in the range from 35°C to 55°C, preferably from 40°C to 50°C.

12. The method according to any one of the previous claims, wherein at step a) the residue is a fat residue or an oil residue, preferably a vegetable oil residue.

13. The method according to any one of the previous claims, wherein step a) comprises contacting the spent sorbent with the solvent at a temperature from 30°C to 60°C.

14. Use of a solvent as defined in any one of the previous claims, in the extraction of a residue from a spent sorbent.

15. The use according to claim 14, for the extraction of one or more fat and/or oil residues, preferably vegetable fat or oil residues, from a spent bleaching earth.
